Europäisches Patentamt

European Patent Office

Office européen des brevets

(19)

(11) Publication number: **0 078 293**
**B1**

(12) **EUROPEAN PATENT SPECIFICATION**

(45) Date of publication of patent specification: **12.03.86**

(51) Int. Cl.⁴: **A 01 K 1/015**

(21) Application number: **82901520.5**

(22) Date of filing: **14.05.82**

(86) International application number:
**PCT/GB82/00146**

(87) International publication number:
**WO 82/03966 25.11.82 Gazette 82/28**

(54) **ANIMAL BEDDING AND ANIMAL HUSBANDRY.**

(30) Priority: **14.05.81 GB 8114833**
**11.07.81 GB 8121441**

(43) Date of publication of application:
**11.05.83 Bulletin 83/19**

(45) Publication of the grant of the patent:
**12.03.86 Bulletin 86/11**

(84) Designated Contracting States:
**BE DE FR NL SE**

(56) References cited:
**GB-A-2 057 844**
**GB-A-2 063 043**
**US-A-2 708 418**
**US-A-3 828 731**

(73) Proprietor: **GARDNER, Thomas Henry**
**8 Haven Road**
**Exeter, Devon (GB)**

(73) Proprietor: **WHITEHEAD, Gareth Dietlof John**
**Gaveston 131 Cowick lane**
**Exeter, Devon (GB)**

(72) Inventor: **GARDNER, Thomas Henry**
**8 Haven Road**
**Exeter, Devon (GB)**
Inventor: **WHITEHEAD, Gareth Dietlof John**
**Gaveston 131 Cowick lane**
**Exeter, Devon (GB)**

(74) Representative: **Stephens, Michael John**
**M.J. Stephens & Co. 46 Tavistock Place**
**Plymouth PL4 8AX (GB)**

Courier Press, Leamington Spa, England.

## Description

This invention relates to the bedding and management generally of animals, particularly poultry, including broiler chickens, pullet chickens and turkeys.

Bedding material commonly used for poultry and other small animals can take a number of different forms, wood shavings being a popular and cheap material. Such known bedding materials suffer from a number of practical disadvantages, not least of which is the risk of infection being transmitted through such material to the animals concerned. Thus residual pesticide or bacteria left active in straw stalks can have a toxic effect on animals bedded on straw, while pesticides or fungicides used for the spraying of felled or standing timber may be present in wood shavings and cause problems such as dieldrin poisoning in poultry bedded on such material.

The Applicants have perfected a bedding material for poultry and animals made up of pieces of shredded paper of a range of different sizes, as described in the Applicants' specification GB—A—2063043.

The present invention aims to provide a method of bedding poultry or other small amimals, using a paper bedding material, which is essentially toxin-free and generally non-supportive of bacterial growth.

In the traditional method of intensive rearing in poultry houses bedding materials such as wood shavings, saw-dust, chopped straw, and mixtures of these, are used. In consequence the atmosphere in poultry houses, particularly broiler chicken houses, becomes thick with dust particles and ammonia gas. In order to prevent dangerous concentrations of dust and ammonia being reached it is necessary to open side and top air vents in the poultry house through which fresh air is drawn as a result of the forced extraction of the contaminated air.

The use of the conventional forced ventilation system in poultry houses proves extremely costly during winter months or in wet seasons, and moreover increases the risk of disease in the poultry. The high cost results from the fact that the warm contaminated air is extracted from the house and is replaced by fresh cold air, which has to be heated, so that a continuous energy input is necessary to maintain a desired steady temperature in the house. Moreover, if the cold air drawn into the house is water-laden the mixture of this air with the warm air already present in the enclosure results in the condensation of water droplets which settle on the litter or bedding material. As a result even more heating is required to dry the bedding material. A further problem is that the wet bedding material increases the risk of disease in the poultry since it exposes the birds to the risk of severe breast blistering and scorching.

Broadly defined, the present invention affords a method of bedding poultry or other animals in which young animals are bedded in an enclosure having closable air vents on a layer of small pieces of absorbent non-toxic paper sheet of a range of different sizes which are alowed to become soiled with excrement, the size distribution of the paper pieces being such that the pieces congeal and form a surface crust or cake at an early stage of use and subsequently break up into a friable material over at least an initial growth period, during which the air vents are closed, the vents being opened after the initial growth period.

Newsprint is ideally suited as the paper sheet of the bedding material as it is printed with carbon ink which is essentially non-toxic, and it is also highly absorbent.

When commencing the bedding of animals by the method of the present invention the layer of bedding material would typically be distributed uniformly on the floor of the enclosure with a density of 0.4—1 Kg per square metre. The precise spreading density used would depend on the nature of the animals being bedded, the population density in the enclosure, and the climatic conditions both inside and outside the enclosure. The bedding material may comprise diced paper, shredded paper or a mixture of diced and shredded paper.

The systematic use of comminuted absorbent paper bedding material by the method of the present invention affords a number of practical advantages including:

a) good thermal insulation properties;

b) high absorbency;

c) freedom from toxicity;

d) the bedding material is non-supportive of bacterial growth;

e) relative economy in use compared with traditional bedding materials;

f) relative freedom from dust in use compared with traditional bedding materials, and

g) ease of handling.

The ease of handling of the bedding material stems, inter alia, from the fact that it is highly absorbent and light to handle. The fact that the soiled bedding material is friable after use facilitates its removal, either piecemeal, or in bulk, and its replacement by fresh bedding material as necessary. The friable paper pieces of the soiled bedding disintegrate readily, and there may be no need to compost the resulting manure-impregnated bedding. Consequently the soiled bedding material can be spread directly onto the land as fertilizer, or introduced into other compostings to take advantage of its beneficial properties.

A significantly reduced consumption of the paper bedding material can be achieved if the animals are bedded on an existing bedding of loose, non-toxic, absorbent material such as paper fragments, shavings, straw or sawdust. In this case, the existing bedding when soiled is covered by a "top dressing", consisting of fragments or separate small pieces of absorbent non-toxic paper sheet. Newsprint is an ideally suited paper for this purpose, as stated previously.

By employing a top dressing layer in accordance with the present invention the working life of animal bedding can be extended significantly, with a minimum expenditure in terms of clean bedding material used, since the "top dressing" of bedding would normally be applied to a much shallower depth than the original bedding. For example, when chickens are reared in poultry houses the original clean bedding material would normally last for the entire growth cycle of a "crop" of birds from day-old chicks (typically 49—56 days). At the end of the "crop" period the bedding material may be removed and the poultry house cleaned and sterilised before the introduction of a new "crop" on fresh bedding. Although the complete replenishment of the bedding material after completion of each "crop" may be the preferred practice, it might sometimes be desirable to produce more than one crop without complete replenishment of the bedding material. This, it has been found, can be achieved satisfactorily if a "top-dressing" layer of clean absorbent paper fragments is applied to the used bedding material after completion of a poultry "crop" and before the introduction of a fresh crop. The preferred material for the "top dressing" is shredded absorbent paper which has been subdivided into small pieces with randomly distributed lengths.

The paper pieces forming the bedding used in the present invention preferably comprises paper strips having different randomly distributed lengths. The strips should have a width of the order of 5—40 mm and length between 5 and 120 mm.

The size distribution of the paper pieces should ideally be within the range 3 cm$^2$ (0.5 sq. in.) to 16 cm$^2$ (2.5 sq. in.). For the best results the paper pieces should comprise strips having a width between 5 and 40 mm and a size distribution such that at least 5% of the strips have lengths within each of the following three ranges: (a) 0.1 mm—20 mm; (b) 20 mm—60 mm and (c) 60 mm and over.

The smallest particles, in the size range (a), assist in the early degradation and breakdown of the initial crust or cake which forms on the surface of the bedding layer. The particles of the intermediate size range (b) assist in the spreading and coverage of the bedding material, promoting the formation of air pockets which create thermal insulation and impart resilience and 'bounce' to the bedding layer. The largest particles, in size range (c), ensure stability of the bedding material in use. These particles, in the form of shreds, have a binding effect, resisting unwanted movement of the bedding material, and further assisting in the thermal insulation afforded by the material.

The abovementioned size distribution of the paper pieces forming the bedding layer is well suited to the rearing of poultry. For some poultry and other intensively reared animals some departure from the stated size distribution may be desirable. For example, the paper bedding may consist predominantly of strips having a length in range (a) between 0.1 mm and 20 mm, while for other uses the length range of 20 mm to 120 mm may predominate. The use of paper pieces of the distributed sizes referred to has been found to be satisfactory, particularly in poultry houses, since the particles retain their absorption capacity throughout the cycle of use, while exhibiting the characteristics of use referred to.

When using comminuted paper as animal bedding material the normal distribution density of the material on the floor of an animal house would normally be between 0.4 and 1.0 Kg per sq. metre. When applied as a "top dressing" the same material would be spread to a density of 0.2—0.6 Kg. per sq. metre, the actual depth of "top dressing" employed being dependent upon the local climatic conditions.

The application of a "top dressing' of absorbent paper fragments can extend the effectiveness and working life of existing animal bedding and litter whether of the traditional kind (for example straw or wood shavings) or of the synthetic kind such as artificial straw or paper litter. Some of the notable advantages of using paper fragments as bedding material, are the relative dust-free and odour-free properties of the material, and its virtual sterility, the material having been found to be effective even when it is used as a thin "top dressing" in the manner described.

The use in accordance with the present invention of toxin-free absorbent paper pieces as bedding material in poultry enclosures reduces the severity of the aforementioned problems. The paper bedding material, particularly with the size distribution described herein, has a very low dust content, and its high absorbency results in substantially reduced release of ammonia gas as the bedding material becomes soiled in use. As a result the atmosphere in a poultry house provided with the paper bedding material of the present invention has much lower working levels of dust and ammonia gas, and the ventilation and extraction of air are less critically important than is the case where traditional bedding materials are used.

It has been found that in practice broiler chickens bedded on the paper bedding material of the present invention in a house having a floor area of 10,000 sq.ft. can be ventilated adequately with two or three extractor fans evenly spaced in the house, and without the need to open the air vents at all, at least during the initial critical period in the life cycle of the broiler chickens. This has immediate advantages in terms of the energy consumption of the house, particularly during winter months, and in terms of the moisture condensation in the house. It has been found that with not more than three extractor fans operating, sufficient fresh air can enter the house through natural gaps around the air vents and doors to replenish the extracted air, without complete replacement of the atmosphere in the house.

In the specific application of the method to the rearing of poultry, chicks are bedded on the paper bedding with the air vents closed for an initial growth period of four weeks. This period is critical for ensuring disease-free rearing of quality birds, and it has been found that much improved weight gains and fees conversion rates have been achieved. After the initial growth period the air ventilation of the enclosure would normally be increased progressively.

The following description relates to the use of absorbent paper fragments, ideally newsprint, as bedding material for the management of different animals, regardless of whether or not the "top dressing" method is employed.

When using shredded or fragmented newsprint as bedding for poultry, particularly broiler or roaster chickens, the bedding is first spread evenly on the floor of a brooding area, where heating is used to maintain a temperature of about 27°C—33°C (80°F—92°F) and day-old chicks are then introduced. After about three to five days, or sometimes as long as seven days, a crusting or caking occurs on the surface of the bedding material. This initial crusting or caking is not in fact detrimental, since it has been shown that the final litter conditions and grading figures for the resulting birds are significantly improved compared with those for birds reared on traditional bedding materials.

After approximately 18—28 days, depending on the temperature maintained in the poultry house, the initial crusting or caking formed on the bedding material will begin to break up, accompanied by the generation of heat. This bacterial action or "working" will continue to occur throughout the period of occupancy of the enclosure by the poultry "crop" giving rise to an efficient breakdown of the caked manure-saturated bedding material, which is more or less granular. At the end.of the poultry crop growing cycle the caked, manure-saturated bedding material will have broken down into a relatively dry, granular, friable material which is highly effective as fertilizer, and as an additive to compost piles.

During the period of bacterial action or "working" the aerobic action of the bacteria maintains the enclosure at a somewhat higher than normal temperature, typically 24°C (75°F), as compared with the usual temperature of about 22°C (72°F). This elevated temperature does not in fact imply an increased energy usage for the heating of the enclosure, since the heat is generated by the bacterial action in the bedding material. On the contrary, the heat input to the enclosure can be reduced because of the internally generated heat resulting from the bacterial action.

This invention will be further described, by way of example, with particular reference to chicken farming.

Beginning with a dry clean chicken house a litter formed of shredded or diced newspaper or other non-toxic absorbent paper sheet is spread evenly on the floor of the house. The spreading density will be dependent upon the population density of the chicken house and the climatic conditions, but in a typical case would be about 0.8 kg per square metre. In some cases as little as 0.4 kg per square metre may be used with adequate results, while in other cases a litter distribution of 1.2 kg per square metre may be advisable. The litter, in the form of evenly mixed shreds of absorbent paper of different lengths, should be shaken out thoroughly and spread evenly on the floor of the enclosure. For a spreading density of 0.8 kg per square metre the average depth of the resulting litter would typically be 4—5 cm (1.5—2 inches).

Once the litter has been distributed in the chicken house a "crop" of day-old chicks is introduced to the brooding area, as described previously. The "crusting" or caking of the distributed litter, which may occur between 3 and 7 days after commencement of the crop, will have the effect of promoting the bio-degradation of the manure-saturated litter, as previously described, promoted by the continuous addition to the litter of excrement from the chickens, until the caked manure-saturated bedding has, at the end of the chicken growing cycle, been broken down by bacterial action into a relatively dry granular friable material.

In some cases a poultry house is "re-cropped" without removing the used litter from the previous crop.

In this case a top dressing of new litter is applied on top of the old litter, using the same technique as described above. The optimum amount of paper litter for use in this way would be between 0.4 kg per square metre and 0.9 kg per square metre.

One of the reasons for the use of diced or shredded newsprint or other absorbent paper as animal litter in the manner described above, is the improvement thereby obtained in the thermal insulation of the poultry house. Another reason is the enhancement of the chicken growth environment by reducing the dust level normally produced by other litter materials, thus promoting good feed conversion. The use of a non-toxic diced or shredded paper material avoids the introduction of any toxic elements into the bedding, substantially reducing the risk of mortality or contamination of the chicken stock. Moreover, because of the particle size and shape of the bedding material the birds do not in practice attempt to eat the bedding material, as can happen when the usual wood shavings or sawdust are used as bedding, and there is less risk, in consequence, of the birds eating such bedding rather than the feed provided.

A part of the technique of the invention that can ensure successful results by the use of the shredded or diced paper bedding material for rearing poultry is through maintaining correct ventilation and constant temperature. The optimum environmental temperature should be between 22 and 24°C (72—75°F) after the birds are three weeks old, since this promotes efficient bacterial breakdown of the litter.

The recommended spreading density of the shredded paper bedding material is important in practice in establishing the correct conditions for the aerobic breakdown of the material during use. If the litter is spread too densely the moisture contained in and deposited on the litter becomes absorbed too deeply for efficient atmospheric action and the litter fails to dry out satisfactorily. Moreover, the bacterial action does not begin effectively if the litter stays too damp. During the initial part of the bacterial action, after the birds are approximately three weeks old, the temperature of the enclosure should be maintained between 22 and 24°C (72—75°F) to ensure that the bacterial action continues efficiently so that, towards the end of the chicken "crop" occupancy time the litter has dried out efficiently, without the need to supply additional external heat energy.

## Claims

1. A method of rearing poultry or other animals in which young animals are bedded in an enclosure having closable air vents on a layer of small pieces of absorbent non-toxic paper sheet of a range of different sizes which are allowed to become soiled with excrement, the size distribution of the paper pieces being such that the pieces congeal and form a surface crust or cake at an early stage of use and subsequently break up into friable material over at least an initial growth period, during which the air vents are closed, the vents being opened after the initial growth period.

2. A method according to Claim 1, specifically for rearing poultry, in which chicks are bedded on the paper bedding with the air vents closed for an initial growth period of 3—5 weeks.

3. A method according to Claim 1 or Claim 2, in which the layer of bedding material is distributed uniformly on the floor of the enclosure with a density of 0.4—1.0 kg per square metre.

4. A method according to Claim 1, in which the bedding material is left *in situ*, before clearing, for a period of approximately 28 days, to allow crusting or caking to occur initially, followed by a breaking-up of the crusted or caked material through the generation of heat by bacterial action.

5. A method according to Claim 2, in which the temperature of the enclosure is maintained between 27° and 33°C upon introduction of the chicks and is subsequently reduced in stages to substantially 22°C—24°C, consistent with adequate drying of the litter in use.

6. A method according to any one of the preceding claims, in which at least some of the paper pieces comprise strips having a length substantially equal to their width.

7. A method according to any one of the preceding claims, in which the paper pieces include strips having different lengths randomly distributed.

8. A method according to Claim 6 or Claim 7, in which the paper strips have a width of the order of 5—40 mm and lengths between 5 mm and 120 mm.

9. A method according to Claim 6 or Claim 7, in which substantially 1% of the cut paper strips have lengths between 100 mm and 120 mm.

10. A method according to any one of the preceding claims, in which the pieces of paper have a size distribution in the range 3 cm² (0.59 sq. in.) to 16 cm² (2.5 sq. in.).

11. A method according to Claim 1 or Claim 2, in which the paper pieces comprise strips having a width of the order of 5—40 mm and at least 5% of the strips have lengths within each of the following three ranges: 0.1 mm—20 mm; 20 mm—60 mm and 60 mm and over.

12. A method according to any one of the preceding claims, in which the absorbent paper pieces are admixed with a proportion of relatively non-absorbent non-toxic paper and/or cardboard.

13. A method according to any one of the preceding claims, in which the layer of absorbent paper pieces is applied as a top dressing layer covering an existing soiled bedding of a loose, non-toxic absorbent material.

14. A method according to Claim 13, in which the top dressing layer is spread over the existing soiled bedding to a density of 0.2—0.6 kg per square metre.

## Patentansprüche

1. Verfahren zum Züchten von Geflügel oder anderen Tieren, wobei Jungtiere in einer Anlage mit schließbaren Luftöffnungen auf einer Schicht von kleinen Stücken von absorbierenden nichtgiftigen Papierblättern eines unterschiedlichen Größenbereiches, die mit Exkrementen verunreinigt werden können, gehalten werden, wobei die Größenverteilung der Papierstücke so ist, daß die Stücke erstarren und zu einem frühen Zeitpunkt des Gebrauchs eine Oberflächenkruste oder Kuchen bilden und nachfolgend nach mindestens einer Anfangswachstumsperiode, während welcher die Luftöffnungen geschlossen sind, in ein krümeliges Material auseinanderfallen, wobei die Öffnungen nach der Anfangswachstumsperiode geöffnet werden.

2. Verfahren nach Anspruch 1, insbesondsere zum Züchten von Geflügel, wobei die Küken auf dem Papierstreu gehalten werden, wobei die Luftöffnungen in einer Anfangswachstumsperiode ode von 3—5 Wochen geschlossen sind.

3. Verfahren nach Anspruch 1 oder 2, wobei die Schicht des Streumaterials gleichmäßig auf dem Boden des Geheges mit einer Dichte von 0,4 bis 1 kg pro m² verteilt wird.

4. Verfahren nach Anspruch 1, wobei vor einer Säuberung das Streumaterial für eine Dauer von ungefähr 28 Tagen in seiner ursprünglichen Lage belassen wird, damit ein Verkrusten oder Verkuchen eintreten kann, an welches sich ein Auseinanderbrechen des verkrusteten oder Kuchenmaterials durch die Erzeugung von Hitze durch bakterielle Wirkung anschließt.

5. Verfahren nach Anspruch 2, wobei die Temperatur des Geheges nach Einbringung der Küken zwischen 27° und 33° C aufrecht gehalten wird und später stufenweise im wesentlichen auf 22° bis 24°C reduziert wird, im Einklang mit der Aufrechterhaltung einer adäquaten Trocknung des Gebrauchsstreus.

6. Verfahren nach einem der Ansprüche, wobei mindestens einige der Papierstücke Streifen sind, deren Länge im allgemeinen ihrer Breite entspricht.

7. Verfahren nach einem der vorstehenden Ansprüche, wobei die Papierstücke Streifen mit verschiedenen Längen beinhalten, wobei die Streifen in den Papierstücken wahllos verteilt sind.

8. Verfahren nach Anspruch 6 oder 7, wobei die Papierstreifen eine Breite in der Größenordnung von 5 bis 40 mm und Längen zwischen 5 und 120 mm aufweisen.

9. Verfahren nach Anspruch 6 oder 7, wobei im wesentlichen 1% der geschnittenen Papierstreifen Längen zwischen 100 und 120 mm aufweisen.

10. Verfahren nach einem der vorstehenden Ansprüche, wobei die Papierstücke eine Großenaufteilung im Bereich von 3 cm² (0,59 sq. in.).

11. Verfahren nach Anspruch 1 oder 2, wobei die Papierstücke Streifen mit einer Breite in der Größenordnung von 5 bis 40 mm aufweisen und mindestens 5% der Streifen Längen innerhalb jeder der folgenden 3 Bereiche aufweisen: 0,1 mm—20 mm; 20 mm—60 mm und 60 mm und mehr.

12. Verfahren nach einem der vorstehenden Ansprüche, wobei die absorbierenden Papierstükke mit einem Anteil von nichtabsorbierenden ungiftigen Papier und/oder Karton gemischt werden.

13. Verfahren nach einem der vorstehenden Ansprüche, wobei die Schicht der absorbierenden Papierstücke als eine obere Deckschicht auf eine vorhandene verschmutzte Streu aus losem nichtgiftigem absorbierenden Material gebracht wird.

14. Verfahren nach Anspruch 13, wodurch die obere Deckschicht über eine vorhandene verschmutzte Streu ausgebreitet wird in einer Dichte von 0,2 bis 0,6 kg pro m².

**Revendications**

1. Procédé pour élever de la volaille ou d'autres animaux, dans lequel les jeunes animaux sont installés dans un enclos ayant des orifices d'aération qui peuvent être fermés, sur un lit de petits morceaux de papier absorbant et non toxique, de différentes dimensions, lesquels petits morceaux de papier peuvent être souillés avec les déjections, la distribution des morceaux de papier étant telle que les morceaux se solidifient et forment une croûte de surface ou un gâteau au tout début de l'utilisation et ensuite se brisent en un matériau friable pendant au moins une période de croissance initiale, pendant laquelle les orifices d'aération sont fermés, les orifices étant ouverts après la fin de la période initiale.

2. Procédé selon la revendication 1, en particulier pour élever de la volaille, dans lequel les poulets sont installés sur le lit de papier avec les orifices d'aération fermés pendant une période initiale de croissance de 3 à 5 semaines.

3. Procédé selon la revendication 1 ou la revendication 2, dans lequel le lit de matériau de litière sur le plancher est distribué uniformément sur le plancher de l'enclos avec une densité de 0,4 à 1.0 kg/m².

4. Procédé selon la revendication 1, dans lequel le matériau de litière est laissé in situ, avant nettoyage, pendant une période d'environ 28 jours, pour laisser le phénomène de croûte ou de gâteau ou apparaître des le début, suivi par la brisure du matériau de croûte ou de gâteau grâce à l'effet de la chaleur par l'action des bactéries.

5. Procédé selon la revendication 2, dans lequel la température de l'enclos est maintenue entre 27°C et 33°C au moment de l'introduction des poulets et est graduellement réduite ensuite par étape jusquà en substance 22°C à 24°C, de façon coordonnée avec la maintenance d'un se1chage adéquat pour la litière en usage.

6. Procédé selon l'une des revendications précédentes, dans lequel au moins quelques-uns des morceaux de papier comprennent des bandes ayant une longueur en substance égale à leur largeur.

7. Procédé selon l'une des revendications précédentes, dans lequel les morceaux de papier comprennent des bandes qui ont des longueurs différentes distribuées au hasard.

8. Procédé selon la revendication 6 ou la revendication 7, dans lequel les bandes de papier ont une largeur de l'ordre de 5 à 40 mm et une longueur comprise entre 5 et 120 mm.

9. Procédé selon la revendication 6 ou la revendication 7, dans lequel environ 1% des bandes de papier découpé ont des longueurs comprises entre 100 et 120 mm.

10. Procédé selon l'une des revendications précédentes, dans lequel les morceaux de papier ont des tailles distribuées dans le créneau de 3 cm² (0,59 square inch) jusqu'à 16 cm² (2,5 square inches).

11. Procédé selon la revendication 1 ou la revendication 2, dans lequel les morceaux de papier comprennent des bandes qui ont une largeur de l'ordre de 5 à 40 mm et dans lequel au moins 5% des bandes ont des longueurs comprises dans chacun des trois segments suivants: 0.1 mm à 20 mm; 20 mm à 60 mm; 60 mm et audessus.

12. Procédé selon l'une des revendications précédentes, dans lequel les morceaux de papier absorbant sont mélangés avec une proportion de papier non toxique et relativement non absorbant et/ou de carton.

13. Procédé selon l'une des revendications précédentes, dans lequel la litière de morceaux de papier absorbant est mise en oeuvre comme une litière de couverture recouvrant un lit existant et déjà sale de matériau absorbant non toxique et lâche.

14. Procédé selon la revendication 13, dans lequel la litière de couverture est répandue audessus du lit existant et souillé avec une densité de 0.2 à 0.6 kg/m².